# EUROPÄISCHE PATENTSCHRIFT

(11) **EP 1 894 758 B1**
(45) Veröffentlichungstag und Bekanntmachung des Hinweises auf die Patenterteilung: **16.11.2011**
(21) Anmeldenummer: 07009392.7
(22) Anmeldetag: 10.05.2007
(51) Int. Cl.: B60J 1/20

(54) **Seitenfensterrollo**
Side window roller blind
Store de fenêtre latérale

(30) Priorität: 29.08.2006 DE 102006040317
(43) Veröffentlichungstag der Anmeldung: 05.03.2008
(73) Patentinhaber: BOS GmbH & Co. KG, 73760 Ostfildern (DE)
(72) Erfinder: Lekar, Jan, 73262 Reichenbach (DE)
(74) Vertreter: Rüger, Barthelt & Abel Patentanwälte

(56) Entgegenhaltungen:
- EP-A- 1 445 134
- DE-C- 513 642
- DE-U1- 8 812 294
- US-A- 1 569 118

## Beschreibung

Um den Fahrer eines Kraftfahrzeuges gegen ungünstige Sonneneinstrahlung zu schützen ist es bekannt, in dem Bereich der Frontscheibe Sonnenblenden zu verwenden. Diese werden vom Dachhimmel herunter geschwenkt. Die Sonnenblenden sind häufig auch um eine vertikale Achse schwenkbar, um sie bei seitlicher Sonneneinstrahlung vor das Fenster der Seitenscheibe drehen zu können. Es besteht also ein Bedarf für eine Sonnenblendeneinrichtung, die im Bereich der Seitenscheibe wirksam ist. Die bisher üblichen Fensterrollos können für Seitenscheiben im Bereich der vorderen Seitenfenster nicht eingesetzt werden. Aufgrund der Vorschriften darf eine Seitenscheibe höchstens bis zu ca. 20...40% der Gesamthöhe des Fensters von oben her abgeschattet werden.

Die Platzverhältnisse zum Einbau von Fensterrollos an vorderen Seitenscheiben sind ebenfalls recht ungünstig, weil die Konstrukteure bemüht sind, den Fensterrahmen der Tür so schmal wie möglich zu halten.

Weitere Probleme entstehen in der Regel durch den etwas gekrümmten Verlauf der hinteren Fensterrahmenkante bzw. den nicht rechtwinkligen Verlauf gegenüber dem angrenzenden Bereich der Fensteroberkante.

Aus alldem resultieren eine Reihe von nicht unerheblichen Problemen für den Konstrukteur

Aus der US 1,569,118 ist ein Fensterrollo für Kraftfahrzeuge bekannt. Das Fensterrollo weist eine Wickelwelle auf, an der mit einer Kante die Rollobahn befestigt ist. Das andere Ende der Rollobahn ist mit einer Ausstattungskante versehen, die in Führungsschienen geführt ist.

Die Wickelwelle weist an beiden Enden Achszapfen auf, die der Lagerung der Wickelwelle dienen. Jeder dieser beiden Achszapfen wird konzentrisch von einer Schraubenfeder umgeben, die einerseits in der Fahrzeugkarosserie fest verankert ist und andererseits mit einem Haken in eine Flanschscheibe der Wickelwelle eingreift. Mit Hilfe dieser beiden Schraubenfedern wird die Wickelwelle im Aufwickelsinne der Rollobahn vorgespannt.

Ausgehend hiervon ist es Aufgabe der Erfindung ein neues Seitenfensterrollo für Kraftfahrzeuge zu schaffen, dass die Bauvorschriften erfüllt und im Fensterrahmen der Tür unterbringbar ist.

Diese Aufgabe wird erfindungsgemäß mit einem Seitenfensterrollo mit den Merkmalen des Anspruches 1 gelöst.

Bei dem neuen Seitenfensterrollo für Kraftfahrzeuge handelt es sich um ein Seitenfensterrollo, das im Bereich der vorderen Seitenfenster, also im Bereich der vorderen Türe, unterbringbar ist. Diese Fenster werden von einer Fensteroberkante sowie einer hinteren Seitenkante begrenzt. Die vordere Seitenkante geht im Allgemeinen in einem sanften Bogen in die Oberkante über, ohne dass eine ausgeprägte Ecke entsteht.

Am Übergang zur Fensterhinterkante hingegen ist eine ausgeprägte Innenkante auszumachen.

Diese beiden Kanten schließen miteinander einen Winkel ein, der vom sonstigen Karosseriedesign abhängig ist.

Das neue Seitenfensterrollo weist eine Wickelwelle auf, die neben der Fensterseitenkante und der Fensteroberkante benachbart anzuordnen ist. Die Achse der Wickelwelle läuft damit, zumindest angenähert, parallel zur hinteren Fensterseitenkante. Die Länge der Wickelwelle ist kürzer als die Länge der Fensterseitenkante.

An der Wickelwelle ist eine Rollobahn mit einer Kante befestigt.

Um die Rollobahn im ausgefahrenen Zustand gestrafft zu halten bzw. auf die Wickelwelle aufzuwickeln, ist ein Federmotor vorgesehen, der von einer Schraubenfeder gebildet ist. Die Schraubenfeder befindet sich außerhalb der Wickelwelle und ist über eine Kupplungseinrichtung mit der Wickelwelle kinematisch verbunden. Die Kupplungseinrichtung zwischen dem Abtriebsende der Schraubenfeder und der Wickelwelle ist gelenkig/flexibel in der Weise, dass die Achse des Abtriebsendes und die Achse der Wickelwelle geknickt zueinander laufen können.

Aufgrund dieser räumlichen Trennung von Wickelwelle und Schraubenfeder wird es möglich, ausreichend lange Schraubenfedern verwenden zu können, die in der Lage sind, die große Zahl von Umdrehungen der Wickelwelle zu beherrschen, die notwendig sind, um die Rollobahn über die gesamte Betriebslänge mit einer brauchbaren Kraft zu beaufschlagen.

Bei der Bemessung des Federmotors muss berücksichtigt werden, dass der Federmotor eine möglichst flache Kennlinie bekommt, damit im eingefahrenen Zustand noch eine hinreichende Vorspannung vorhanden ist, während im ausgefahrenen Zustand die Vorspannung nicht übermäßig ansteigen darf. Als Folge hiervon wird eine Feder benötigt, die einen, bezogen auf den ausgenutzten Hub, sehr langen möglichen Hub hat, wobei der ausgenutzte Hub im mittleren Bereich des theoretisch möglichen Hubs liegt.

Bei einer praktischen Ausführung ist der Federmotor etwa doppelt so lang wie die Wickelwelle.

Die axiale räumliche Trennung von Federmotor und Wickelwelle erlaubt obendrein eine leichte Anpassung an den etwas geknickten Verlauf der äußeren Rahmenkontur, d.h. des Verlaufs zwischen der Innenkante des Fensterrahmens und der Hinterkante der Tür.

Entsprechend der Höhe des Fensters und der zulässigen Abschattung, beträgt die Länge der Wickelwelle zwischen 10% und 40% der Länge der Fensterseitenkante.

Entsprechend den geometrischen Verhältnissen im Bereich der Fensteroberkante kann es günstig sein, wenn die Wickelwelle die Gestalt eines Kegelstumpfes mit kleinem Kegelwinkel hat. Dadurch kann eine gute, möglichst spaltfreie Anpassung der Rollobahnkante an die Fensteroberkante erreicht werden. Wegen der Kräfteverhältnisse innerhalb der Rollobahn ist es in der Regel nicht möglich, Rollobahnseitenkanten zu verwenden, die ausgeprägt konvex gekrümmt sind. Der weit über die gerade Näherungslinie nach außen überstehende bombierte Bereich würde zur Schlaffheit neigen und aufgrund der Fahrzeugbewegungen schlappern.

Bei den meisten Fahrzeuggeometrien ist in der Regel das dünnere Ende der kegelstumpfförmigen Wickelwelle der Fensteroberkante zugekehrt.

Die Rollobahn hat angenähert die Gestalt eines spitzen Dreiecks, um eine möglichst gute Abschattungswirkung zu erzielen.

Ein ästhetisch angenehmes Aussehen ergibt sich, wenn die Wickelwelle innerhalb des Fensterrahmens, d.h. innerhalb der Türverkleidung untergebracht ist.

Im einfachsten Falle ist das Seitenfensterrollo ein manuelles Fensterrollo. In diesem Falle ist an einer von der Wickelwelle abliegenden Stelle in einem Bereich, wo die Fensteroberkante in die Vorderkante übergeht, eine Verankerungseinrichtung vorgesehen. Diese Verankerungseinrichtung korrespondiert mit einer an der Rollobahn vorgesehenen Verankerungseinrichtung, damit das Rollo dort im ausgezogenen Zustand eingehängt oder eingehakt werden kann.

Um die Rollobahn zu betätigen bzw. einzuhängen ist ein Griff an der Spitze der Rollobahn vorgesehen.

Es leuchtet ohne weiteres ein, dass das erfindungsgemäße Seitenrollo auch in der üblichen Weise elektrisch betätigt werden kann. Hierzu kann im Bereich der Fensteroberkante eine Führungsschiene vorgesehen sein, in der eine Gleit- oder Führungseinrichtung läuft, die mit dem freien Ende der Rollobahn verbunden ist.

Ein manuelles Rollo kann ebenfalls mit einer solchen Führungseinrichtung versehen sein, wozu dann die Gleiteinrichtung mit einer Bremseinrichtung versehen ist, damit die Rollobahn an beliebiger Stelle mit der freien Kante positioniert werden kann.

Die Vormontage und die endgültige Montage seitens des Kraftfahrzeugsherstellers wird vereinfacht, wenn der Schraubenfeder des Federmotors ein Gehäuse zugeordnet ist, Dieses Gehäuse kann im einfachsten Falle rohrförmig sein.

Es ist günstig, wenn das rohrförmige Gehäuse becherartig ist, in dem Sinne, dass es an der Unterseite verschlossen ist. Auf diese Weise wird einerseits die Wickelwelle sehr gut geschützt und andererseits kann in das Gehäuse eine Dämpferflüssigkeit eingefüllt werden, die verhindert, dass die Schraubenfeder aufgrund der Fahrzeugbewegungen Klappergeräusche erzeugt. Eine weitere Quelle von Klappergeräuschen ist im Übrigen auch die Beschleunigungskraft, die beim Zuschlagen der Tür entsteht. Diese Kraft kann bis zu 15g betragen, womit die im Bereich der Fensterhinterkante angeordneten Teile des Seitenfensterrollos entsprechend sehr robust ausgeführt werden müssen.

Sehr einfache Verhältnisse hinsichtlich der Montage ergeben sich, wenn die Feder als Schraubenzugfeder ausgeführt ist und an ihrem Abtriebsende mit einem in dem Gehäuse gelagerten Lagerstück versehen ist. Durch das Gehäuse wird zwangsläufig die Länge der Schraubenzugfeder definiert, was Zugkräfte an der Wickelwelle verhindert. Gleichzeitig kann durch das Lagerstück bei einem becherförmigen Gehäuse eine weitgehend vollständige Abdichtung erzielt werden.

Gelenkige Kupplungseinrichtungen sind beispielsweise Kardangelenke oder Kreuzgelenke, die allerdings für diesen einfachen Gegenstand unverhältnismäßig aufwändig sind. Einfacher dagegen sind beispielsweise Verbindungen nach der Art einer Hardischeibe oder biegsame Wellen. Eine der einfachsten Verbindungen dürften die Kupplung aus zwei Mitnehmern sein, von denen einer die Gestalt einer Öse und der andere in Gestalt eines Hakens aufweist, der in der Öse eingehängt ist. Da aufgrund des Federmotors diese Verbindung ohnehin in einer Richtung ständig vorgespannt ist, können auch keine Klappergeräusche entstehen.

Im Übrigen sind Weiterbildungen der Erfindung Gegenstand von Unteransprüchen.

Die nachfolgende Figurenbeschreibung beschränkt sich auf die Erläuterung der wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

Die nachfolgenden Zeichnungen sind nicht unbedingt maßstäblich. Zur Veranschaulichung der wesentlichen Details kann es sein, dass bestimmte Bereiche übertrieben groß dargestellt sind.

In der Zeichnung ist ein Ausführungsbeispiel des Gegenstandes der Erfindung dargestellt. Es zeigen.
- Fig. 1: eine linke Kraftfahrzeugtür in einer Draufsicht auf die Innenseite und
- Fig. 2: das Seitenfensterrollo aus der Tür nach Fig. 1, in einer vergrößerten teilweise perspektivischen Darstellung, in Verbindung mit einem gestrichelt angedeuteten Fensterrahmen.

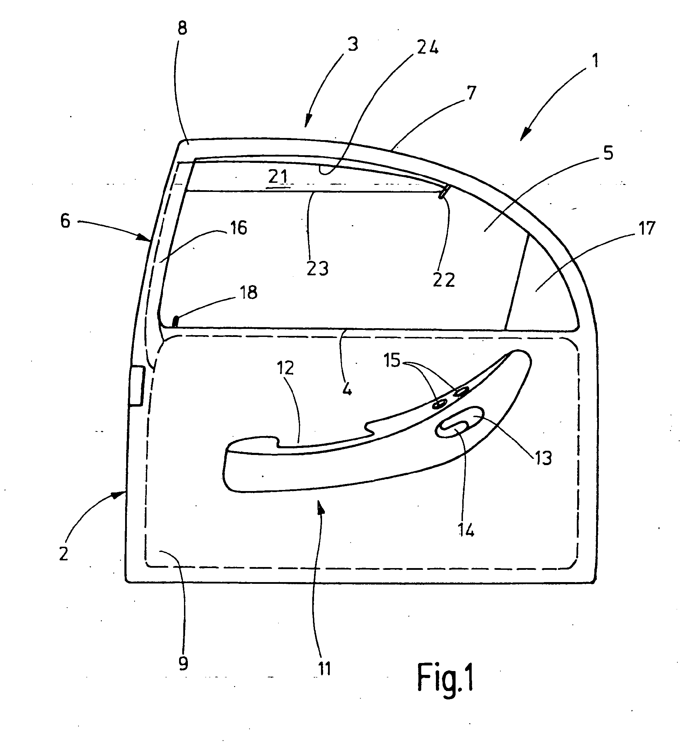

Fig. 1 zeigt eine Ansicht auf die Innenseite einer linken Vordertür 1 eines Kraftfahrzeugs. Zu erkennen ist ein unterer Türkorpus 2 über den sich bogenförmig ein Fensterrahmen 3 spannt. Der Fensterrahmen 3 begrenzt, zusammen mit einer Oberkante 4 des Korpus 2, eine Fensteröffnung 5. Der Rahmen 3 gliedert sich in ein hinteres Rahmenteil 6 und ein oberes Rahmenteil 7, die bei 8 mit einer Innenecke ineinander übergehen.

Der hintere Rahmenabschnitt 6 führt von der Innenecke 8 zu der Oberkante 4 des Korpus 2 und mündet dort in den Korpus 2 ein.

Der obere Rahmenabschnitt 7 führt von der Innenecke 8 zur Vorderkante der Tür und verläuft im Bogen, bevor er ebenfalls in den Korpus 2 einmündet.

Wenn hier von Rahmen bzw. Korpus die Rede ist, sind damit die Hohlgebilde an sich bezeichnet, in denen die einzelnen Türeinbauteile wie Lautsprecher, Schlösser, Fensterheber, Scheiben und dergleichen, gelagert und geführt sind, ohne dass im weiteren zwischen der tragende Blechkarosserie und einer eventuell vorhandenen Innenverkleidung differenziert wird. Es ist für den Fachmann klar, dass sowohl der Fensterrahmen als auch der Korpus hohl gebildet sind.

Den weit überwiegenden Teil der Sichtseite des Korpus 2 bildet dessen Innenverkleidung 9, auf der eine Türgriffanordnung 11 befestigt ist. Die Türgriffanordnung 11 weist eine Griffmulde 12, einen in einer Mulde 13 schwenkbar gelagerten Schlossbetätigungshebel 14 sowie Schalter 15 auf, mit denen Fensterscheiben, Spiegel, Sitze und dergleichen verstellt oder betätigt werden können.

Eine weitere streifenförmige Innenverkleidung 16 ist auf der Innenseite des hinteren Rahmenabschnitts 6 zu erkennen.

Im Bereich des vorderen Teils des Fensterausschnitts 5 befindet sich eine Füllplatte 17, an der in bekannter Weise auf der Außenseite ein Außenspiegel sitzt und in der eine Führungsschiene für eine nicht weiter zu erkennende Fensterscheibe angeordnet ist. Eine korrespondierende Führungsschiene befindet sich in dem hinteren Rahmenabschnitt 6. Die Führungsschienen laufen bis in den Korpus 2 hinein.

Schließlich ist auf der Oberseite 4 des Korpus 2 ein Zapfen 18 zu erkennen, der als Tür-Verriegelungsknopf dient und den Schließzustand des Türschlosses anzeigt.

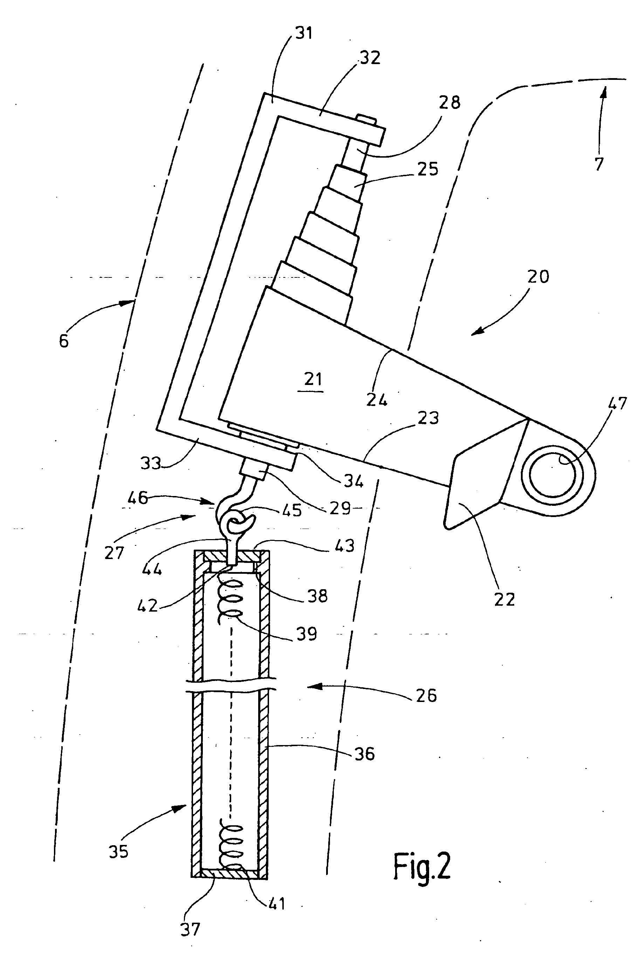

Die solchermaßen aufgebaute Vordertür 1 ist mit einem Seitenfensterrollo 20 versehen (Fig. 2), dessen Rollobahn 21 in Fig. 1 ausgezogen gezeigt ist. Die Rollobahn 21 hat, wie zu erkennen ist, einen etwa dreieckförmigen Zuschnitt, wobei sich das breite Ende bei dem hinteren Fensterrahmenabschnitt 6 befindet, während die Spitze mit einer Grifflasche 22 versehen ist und in einer weiter unten beschriebenen Weise in einen Haken oder Zapfen an der Unterseite des oberen Fensterrahmenabschnitts 7 einhängbar ist.

Die Rollobahn 21 wird von zwei Kanten 23 und 24 begrenzt, von denen, zumindest die Kante 23, exakt gerade ist, während die Kante 24 nahezu gerade oder ebenfalls völlig gerade verläuft.

Im aufgespannten Zustand, wie er in Fig. 1 gezeigt ist, erstreckt sich die Rollobahn 21 neben der Innenseite der Fensterscheibe knapp unterhalb des horizontal verlaufenden Abschnitts des oberen Fensterrahmenabschnitts 7, wobei zwischen dessen Unterkante und der Rollobahnkante 24 praktisch kein oder nur ein sehr geringer Spalt verbleibt. Die Unterkante 23 läuft etwa parallel zu der Oberkante 4 des Korpus 2, und zwar in einem solchen Abstand, dass der nach den Gestaltungsvorschriften zulässige Bereich verbleibt, durch den eine ungehinderte Sicht nach außen zwingend vorgeschrieben ist.

Die Rollobahn 21 wird durch einen Schlitz ausgezogen, der sich neben der Innenseite der Fensterscheibe befindet und der von der Innenecke 3 ausgeht. Der Schlitz ist in der Innenverkleidung 6 als Ausnehmung ausgebildet.

Den Aufbau des Seitenfensterrollos 20 zeigt Fig. 2. Wie dort zu erkennen ist, gehört zu dem Seitenfensterrollo 20 eine Wickelwelle 25 sowie eine Federmotoranordnung 26, die mit der Wickelwelle 25 über eine Kupplungseinrichtung 27 drehfest gekuppelt ist.

Die Darstellung des Aufbaus des Seitenfensterrollos 20ist etwas plakativ vereinfacht, um die wesentlichen Details erkennen zu lassen. Befestigungselemente, Schrauben, Laschen und dergleichen, die für das Verständnis der Erfindung nicht erforderlich sind, sind weggelassen, um die Zeichnung nicht mit Details zu überfrachten. Welche Befestigungsmaßnahmen im Einzelnen getroffen werden, ist für den Fachmann klar und braucht nicht erläutert zu werden.

Die Wickelwelle 25 ist ein kegelstumpfförmiges Gebilde, an dem mit einer Kante die dreieckförmige zugeschnittene Rollobahn 21 befestigt ist. An den beiden axialen Enden der Wickelwelle 25 sind Lagerzapfen 28 und 29 vorgesehen. Mit Hilfe dieser beiden Lagerzapfen 28 und 29 ist die Wickelwelle 25 in einem Lagerbock 31 drehbar gelagert. Der Lagerbock 31 hat eine U-förmige Gestalt und bildet zwei Schenkel 32 und 33, die miteinander fluchtende Lagerbohrungen enthalten, in denen die Lagerzapfen 28 und 29 drehbar aufgenommen sind. Der Lagerbock 31 ist in nicht weiter veranschaulichter Weise an dem tragenden Stahlblechteil des Rahmenabschnittes 6 befestigt, der in Fig. 2 mit gestrichelten Linien veranschaulicht ist. Im oberen Bereich geht der Rahmenabschnitt 6 in den Rahmenabschnitt 7 über, der ebenfalls in Fig. 2 gestrichelt mit seiner Unterkante angedeutet ist.

Um einen leichten Lauf der Wickelwelle 25 in dem Lagerbock 31 zu erreichen, ist an der Unterseite noch eine Anlaufscheibe 34 eingefügt.

Der Federmotor 26 dient dazu, die Rollobahn 21 gestrafft zu halten bzw. die Rollobahn auf der Wickelwelle 25 aufzuwickeln, wenn der Benutzer die Verankerung zwischen der Rollobahn 21 und dem Fensterrahmenabschnitt 7 gelöst hat.

Zu dem Federmotor 26 gehört ein becherförmiges Gehäuse 35 mit einer zylindrischen Seitenwand 36 und einem Boden 37. Am oberen Ende bildet das becherförmige Gehäuse 35 einen nach innen ragenden Lagerbund 38. Das Gehäuse 35 ist in geeigneter Weise, beispielsweise mittels angeformter Laschen, mit dem tragenden Karosserieteil der Tür 1 verbunden.

Im Inneren des becher- oder rohrfömigen Gehäusea 35 befindet sich eine Schraubenzugfeder 39. Ihr unteres Ende ist bei 41 zug- und drehfest mit dem Boden 37 verbunden. Ihr anderes Ende 42 bildet das Abtriebsende, das koaxial zu dem Gehäuse 35 in einer Lagerscheibe 43 verankert ist. Die Schraubenzugfeder 39 verläuft im Wesentlichen koaxial durch den Innenraum des becherförmigen Gehäuses 35.

Die Lagerscheibe 43 ist drehfest und axial unverschieblich mit dem Abtriebsende 42 der Schraubenzugfeder 39 verbunden.

Das Abtriebsende 42 ist mit einem Schaft 44 einer Öse 45 drehfest und zugfest verbunden, die einen Teil/Hälfte der gelenkigen Kupplungseinrichtung 27 darstellt.

Zufolge der Vorspannkraft der Schraubenzugfeder 39 wird die Lagerscheibe 43 gegen den nach innen ragenden Bund 38 axial vorgespannt. Der Bund 38 nimmt die von der Zugfeder 39 ausgehende Zugkraft auf.

Die Öse 45 ist gegenüber dem Gehäuse 35 drehbar, wobei die Drehachse parallel zur Längsachse des Gehäuses 35 liegt.

Der untere Lagerzapfen 29 ist mit einem Haken 46 versehen, der, wie gezeigt in der Öse 45 eingehängt ist und den zweiten Teil/Hälfte der Kupplungseinrichtung 27 bildet.

Die Kupplungseinrichtung 27, die aus dem Haken 46 und der Öse 45 besteht, ist in der Weise gelenkig, dass die Drehachsen dieser beiden Teile einen von 180° verschiedenen Winkel miteinander einschließen können. Außerdem sind die beiden Kupplungsteile oder Kupplungshälften leicht voneinander zu trennen bzw. formschlüssig miteinander zu verbinden. Der Haken 46 kann in der Öse 45 beliebig Spiel haben. Wegen der Vorspannung des Federmotors 26 wird die Kupplurigseinrichtung 27 ständig in dieselbe Richtung vorgespannt. Klappergeräusche können damit nicht auftreten.

Vorzugsweise ist das Gehäuse 35 nach unten flüssigkeitsdicht und es kann eine Dämpfungsflüssigkeit eingefüllt werden, die verhindert, dass Schwingungen in der Schraubenzugfeder 39 entstehen, die dazu führen, dass die Schraubenzugfeder anschlägt und hässliche Geräusche erzeugt.

Die Funktionsweise des beschriebenen Seitenfensterrollos 20 ist wie folgt:
Im Ruhezustand ist die Rollobahn 21 unter der Wirkung des Federmotors 26 vollständig auf die Wickelwelle 25 aufgewickelt. Die wegstehende Grifflasche 22 bildet einen mechanischen Anschlag der verhindert, dass die Rollobahn völlig in dem Rahmenabschnitt 6 verschwindet. Außerdem bildet die Grifflasche 22 den Anschlag der somit die Drehbewegung der Wickelwelle 25 begrenzt und verhindert, dass der Federmotor 26 vollständig abläuft. Die Grifflasche 22 legt sich hierzu an dem oben erwähnten Schlitzrand an.

Wenn der Benutzer das Seitenfensterrollo 20 aufspannen will, ergreift er mit der Hand die Grifflasche 22 und führt die Grifflache 22 von dem hinteren Rahmenabschnitt 6 in den Bereich des vorderen Teils des oberen Rahmenabschnitts 7 an eine Stelle, wo sich ein entsprechender Haken oder Zapfen befindet. An diesem Zapfen hängt der Benutzer die dort spitz zulaufende Rollobahn 21 mit der dort vorhandenen Öse 47 ein. Während dieser Auszugsbewegung dreht sich die Rollowelle 25 und spannt den Federmotor 26 weiter vor.

Wegen der Länge des Fensters im Bereich der Rollobahn 21 werden hier, je nach Ausgangsdurchmesser der Wickelwelle 25, zwischen 8 und 15 Umdrehungen benötigt. Diese hohe Anzahl von Umdrehungen erfordert eine Schraubenzugfeder 39 mit einer Länge, die nicht mehr innerhalb der Wickelwelle 25 in der bekannten Weise unterbringbar ist. Der Federmotor 26 befindet sich deswegen vollständig außerhalb der Wickelwelle 25, was obendrein eine bessere Anpassung an die komplizierte Geometrie der Tür ermöglicht. Insbesondere wird es möglich, eine sehr lange Feder 39 zu verwenden, die eine sehr flache Federkennlinie ermöglicht.

Durch die gelenkige Kupplung 27, deren Drehachsen gegeneinander geknickt sind, hat der Fachmann beim Einbau des Seitenfensterrollos einen größeren Spielraum. Das durchaus lange Gebilde aus Wickelwelle und Federmotor muss nicht mehr auf einer einzigen Geraden angeordnet werden. Vielmehr ist es möglich, die Achsen des Federmotors und der Wickelwelle im Winkel zueinander anzuordnen und so einen bogenförmig gekrümmten Verlauf anzunähern.

Die Länge des Federmotors 26, bezogen auf die Länge der Wickelwelle 25, ist in Fig. 2 nicht maßstäblich. Der Federmotor ist mehr als doppelt so lang wie die Wickelwelle.

Anstelle der formschlüssigen gelenkigen Kupplungseinrichtung 27 kann auch eine Art kurze biegsame Welle verwendet werden. Wie so etwas zu gestalten ist, braucht zeichnerisch nicht dargestellt zu werden, da dies dem Fachmann ohne weiteres geläufig ist. Aufwändigere Gelenke, wie Kaderngelenke und vergleichbares, beispielsweise Hardischeiben usw., können ebenfalls eingesetzt werden.

Da es bei der vorliegenden Erfindung im Wesentlichen um die Art des Antriebs der Wickelwelle geht, ist es nicht im Einzelnen erforderlich zu zeigen, dass die Spitze der Rollobahn anstelle über die Grifflasche 22 manuell zu bewegen, auch elektrisch betätigt werden kann. Hierzu wird beispielsweise in dem Bereich des oberen Rahmenabschnitts 7 eine entsprechende Führungsschiene untergebracht, in der ein an der Spitze der Rollobahn 21 befestigtes Gleitstück läuft. Die Betätigung des Gleitstücks kann über Seilzüge mit Hilfe eines Elektromotors erfolgen, wie dies aus dem Stand der Technik hinlänglich bekannt ist und deswegen auch hier auch nicht beschrieben werden muss.

Schließlich sei noch erwähnt, dass die Führungsschiene mit Führungsstück auch für die manuelle Betätigung vorgesehen werden kann, indem beispielsweise zusätzlich noch eine Bremse vorgesehen wird, womit es möglich wird, die Rollobahn 21 in jeder beliebigen Auszugsposition zu halten.

Ein Seitenfensterrollo weist eine Wickelwelle auf, die über eine gelenkige/flexible Kupplungseinrichtung mit einem Federmotor gekuppelt ist, der sich außerhalb der Wickelwelle befindet. Die Wickelwelle und der Federmotor sind innerhalb des vertikalen Fensterrahmenabschnitts eines Kraftfahrzeugfensters untergebracht. Die gelenkige/flexible Kupplung zwischen der Wickelwelle und dem Federmotor gestattet es, mit Hilfe dieser beiden an sich geraden Rollobauelemente einen gekrümmten Verlauf anzunähern. Außerdem kann auch bei sehr kurzer Wickelwelle eine sehr flache Kennlinie des Federmotors realisiert werden.

## Patentansprüche

1. Seitenfensterrollo für Kraftfahrzeuge, bei denen das Seitenfenster von einem Fensterrahmen (3) umgeben ist, der eine Oberkante (7) sowie eine Seitenkante (6) aufweist, die gemeinsam eine Innenecke (8) begrenzen,
mit einer Wickelwelle (25), die neben der Fensterseitenkante (6) und mit einem Ende der Fensteroberkante (7) benachbart anordenbar ist,
mit einer Rollobahn (21), die mit einer Kante an der Wickelwelle (25) befestigt ist,
mit einer Schraubenfeder (39) als Federmotor zum Vorspannen
der Wickelwelle (25) im Sinne eines Aufwickelns der Rollobahn (21) auf die Wickelwelle (25), wobei die Schraubenfeder (39) außerhalb der Wickelwelle (25) in deren Verlängerung angeordnet ist und ein fixiertes Ende (41) sowie ein Abtriebsende (42) aufweist, das der Wickelwelle (25) benachbart ist, und
mit einer Kupplungseinrichtung (27), die das Abtriebsende (42) mit der Wickelwelle (25) antriebsmäßig verbindet wobei die Kupplungseinrichtung (27) gelenkig ausgeführt
ist, derart dass ihre beiden Drehachsen einen von 180° verschiedenen Winkel einnehmen können.

2. Seitenfensterrollo nach Anspruch 1, **dadurch gekennzeichnet, dass** die Länge der Wickelwelle (25) zwischen 20% und 40% die Länge der Fensterseitenkante (6) beträgt.

3. Seitenfensterrollo nach Anspruch 1, **dadurch gekennzeichnet, dass** die Wickelwelle (25) die Gestalt eines Kegelstumpfes aufweist

4. Seitenfensterrollo nach Anspruch 3, **dadurch gekennzeichnet, dass** das dünnere Ende der Wickelwelle (25) der Fensteroberkante (7) zugekehrt ist.

5. Seitenfensterrollo nach Anspruch 1, **dadurch gekennzeichnet, dass** die Rollobahn (21) angenähert die Gestalt eines spitzen Dreiecks aufweist.

6. Seitenfensterrollo nach Anspruch 1, **dadurch gekennzeichnet, dass** die Wickelwelle (25) innerhalb des Fensterrahmens (3) unterbringbar ist.

7. Seitenfensterrollo nach Anspruch 1, **dadurch gekennzeichnet, dass** das Seitenfenster (5) ein vorderes Seitenfenster eines Kraftfahrzeugs ist.

8. Seitenfensterrollo nach Anspruch 1, **dadurch gekennzeichnet, dass** der Fensterrahmen (3) an einer von der Wickelwelle (25) abliegenden Stelle eine Verankerungseinrichtung aufweist.

9. Seitenfensterrollo nach Anspruch 8, **dadurch gekennzeichnet, dass** die Rollobahn (21) mit einer Verankerungseinrichtung (47) versehen ist.

10. Seitenfensterrollo nach Anspruch 1, **dadurch gekennzeichnet, dass** die Rollobahn (21) mit einem Griff (22) versehen ist.

11. Seitenfensterrollo nach Anspruch 1, **dadurch gekennzeichnet, dass** der Fensterrahmen (3) im Bereich der Fensteroberkante (7) eine Führungsschiene enthält.

12. Seitenfensterrollo nach Anspruch 11, **dadurch gekennzeichnet, dass** die Rollobahn (21) an ihrem von der Wickelwelle (25) abliegenden Ende mit einer Führungseinrichtung versehen ist, die dazu eingerichtet ist, in der Führungsschiene zu laufen.

13. Seitenfensterrollo nach Anspruch 12, **dadurch gekennzeichnet, dass** der Führungseinrichtung eine Bremseinrichtung zugeordnet ist

14. Seitenfensterrollo nach Anspruch 1, **dadurch gekennzeichnet, dass** die Länge der Schraubenfeder (39) größer ist als die Länge der Wickelwelle (25).

15. Seitenfensterrollo nach Anspruch 1, **dadurch gekennzeichnet, dass** der Schraubenfeder (39) ein Gehäuse (35) zugeordnet ist.

16. Seitenfensterrollo nach Anspruch 15, **dadurch gekennzeichnet, dass** das Gehäuse (35) eine zumindest angenähert rohrförmige Gestalt aufweist.

17. Seitenfensterrollo nach Anspruch 15, **dadurch gekennzeichnet, dass** das Gehäuse (35) an dem in der Gebrauchsstellung unten befindlichen Ende flüssigkeitsdicht verschlossen ist.

18. Seitenfensterrollo nach Anspruch 15, **dadurch gekennzeichnet, dass** das Gehäuse (35) mit einer Dämpfungsflüssigkeit, zumindest teilweise, gefüllt ist.

19. Seitenfensterrollo nach Anspruch 1, **dadurch gekennzeichnet, dass** das Abtriebsende (42) der Schraubenfeder (39) mit einem Lagerstück (43) versehen ist, das in dem Gehäuse drehbar gelagert ist.

20. Seitenfensterrollo nach Anspruch 1, **dadurch gekennzeichnet, dass** die Achse der Schraubenfeder (39) mit der Achse der Wickewelle (25) einen Winkel zwischen 180° und ca. 120° einschließt.

21. Seitenfensterrollo nach Anspruch 1, **dadurch gekennzeichnet, dass** die Kupplungseinrichtung (27) einen mit der Wickelwelle (25) starr verbundenen und einen mit dem Abtriebsende (42) der Schraubenfeder (39) starr verbundenen Mitnehmer (45,46) aufweist, die formschlüssig miteinander zusammenwirken.

22. Seitenfensterrollo nach Anspruch 21, **dadurch gekennzeichnet, dass** einer der beiden Mitnehmer (45,46) ein Haken ist.

23. Seitenfensterrollo nach Anspruch 21, **dadurch gekennzeichnet, dass** einer der beiden Mitnehmer (45,46) eine Öse ist.

24. Seitenfensterrollo nach Anspruch 1, **dadurch gekennzeichnet, dass** die Kupplungseinrichtung (27) eine biegsame Welle oder ein Kardangelenk umfasst.

## Claims

1. Side window roller blind for motor vehicles, in which the side window is surrounded by a window frame (3), which has an upper edge (7) and also a side edge (6), which jointly delimit an inside corner (8),
with a winding shaft (25), which can be arranged next to the window side edge (6) and adjacent to the upper edge (7) of the window at one end,
with a blind sheet (21), which is fastened to the winding shaft (25) at one edge,
with a coil spring (39) as spring motor for biasing the winding shaft (25) in the sense of winding the blind sheet (21) onto the winding shaft (25), wherein the coil spring (39) is arranged outside the winding shaft (25) in the extension thereof and has a fixed end (41) as well as an output end (42), which is adjacent to the winding shaft (25), and
with a coupling means (27), which connects the output end (42) to the winding shaft (25) for driving,
wherein the coupling means (27) is articulated in such a manner that its two rotational axes can occupy an angle other than 180°.

2. Side window roller blind according to claim 1, **characterised in that** the length of the winding shaft (25) amounts to between 20% and 40% of the length of the window side edge (6).

3. Side window roller blind according to claim 1, **characterised in that** the winding shaft (25) has the shape of a truncated cone.

4. Side window roller blind according to claim 3, **characterised in that** the thinner end of the winding shaft (25) is directed towards the upper edge (7) of the window.

5. Side window roller blind according to claim 1, **characterised in that** the blind sheet (21) has approximately the shape of an acute-angled triangle.

6. Side window roller blind according to claim 1, **characterised in that** the winding shaft (25) can be accommodated inside the window frame (3).

7. Side window roller blind according to claim 1, **characterised in that** the side window (5) is a front side window of a motor vehicle.

8. Side window roller blind according to claim 1, **characterised in that** the window frame (3) has an anchoring means at a location remote from the winding shaft (25).

9. Side window roller blind according to claim 8, **characterised in that** the blind sheet (21) is provided with an anchoring means (47).

10. Side window roller blind according to claim 1, **characterised in that** the blind sheet (21) is provided with a grip (22).

11. Side window roller blind according to claim 1, **characterised in that** the window frame (3) contains a guide rail in the region of the upper edge (7) of the window.

12. Side window roller blind according to claim 11, **characterised in that** at its end remote from the winding shaft (25) the blind sheet (21) is provided with a guide means, which is arranged to run in the guide rail.

13. Side window roller blind according to claim 12, **characterised in that** the guide means has an associated braking means.

14. Side window roller blind according to claim 1, **characterised in that** the length of the coil spring (39) is larger than the length of the winding shaft (25).

15. Side window roller blind according to claim 1, **characterised in that** the coil spring (39) has an associated housing (35).

16. Side window roller blind according to claim 15, **characterised in that** the housing (35) has an at least approximately tubular structure.

17. Side window roller blind according to claim 15, **characterised in that** the housing (35) is closed in a liquid-tight manner at the end located at the bottom in the position of use.

18. Side window roller blind according to claim 15, **characterised in that** the housing (35) is at least partially filled with a damping fluid.

19. Side window roller blind according to claim 1, **characterised in that** the output end (42) of the coil spring (39) is provided with a bearing piece (43), which is rotatably mounted in the housing.

20. Side window roller blind according to claim 1, **characterised in that** the axis of the coil spring (39) encloses an angle of between 180° and approximately 120° with the axis of the winding shaft (25).

21. Side window roller blind according to claim 1, **characterised in that** the coupling means (27) has entrainment means (45, 46), one being rigidly connected to the winding shaft (25) and one being rigidly connected to the output end (42) of the coil spring (39), and which cooperate with one another in a positive-locking manner.

22. Side window roller blind according to claim 21, **characterised in that** one of the two entrainment means (45, 46) is a hook.

23. Side window roller blind according to claim 21, **characterised in that** one of the two entrainment means (45, 46) is an eyelet.

24. Side window roller blind according to claim 1, **characterised in that** the coupling means (27) comprises a flexible shaft or a cardan joint.

## Revendications

1. Store de vitre latérale pour véhicules automobiles vans lesquels la vitre latérale est entourée par un cadre de fenêtre (3) qui présente un bord supérieur (7) et un bord latéral (6), lesquels délimitent ensemble un coin intérieur (8), ledit store comprenant un arbre enrouleur (25) qui peut être disposé à côté du bord latéral de vitre (6) et au voisinage d'une extrémité du bord supérieur de vitre (7), comprenant un écran enroulable (21) fixé par un bord à l'arbre enrouleur (25), comprenant un ressort hélicoïdal (39) servant de moteur à ressort pour précontraindre l'arbre enrouleur (25) dans le sens d'un enroulement de l'écran enroulable (21) sur l'arbre enrouleur (25), le ressort hélicoïdal (39) étant disposé à l'extérieur de l'arbre enrouleur (25) dans son prolongement et présentant une extrémité fixée (41) ainsi qu'une extrémité de sortie (42) qui est voisine de l'arbre enrouleur (25), et comprenant un dispositif d'accouplement (27) qui relie avec entraînement l'extrémité de sortie (42) à l'arbre enrouleur (25), le dispositif d'accouplement (27) étant réalisé de manière articulée, de façon que ses deux axes de rotation puissent adopter un angle différent de 180°.

2. Store de vitre latérale selon la revendication 1, **caractérisé en ce que** la longueur de l'arbre enrouleur (25) est comprise entre 20 % % et 40 % de la longueur du bord latéral de vitre (6).

3. Store de vitre latérale selon la revendication 1, **caractérisé en ce que** l'arbre enrouleur (25) présente la forme d'un tronc de cône.

4. Store de vitre latérale selon la revendication 3, **caractérisé en ce que** l'extrémité plus mince de l'arbre enrouleur (25) est tournée vers le bord supérieur de vitre (7).

5. Store de vitre latérale selon la revendication 1, **caractérisé en ce que** l'écran enroulable (21) présente approximativement la forme d'un triangle aigu.

6. Store de vitre latérale selon la revendication 1, **caractérisé en ce que** l'arbre enrouleur (25) peut être logé à l'intérieur du cadre de fenêtre (3).

7. Store de vitre latérale selon la revendication 1, **caractérisé en ce que** la vitre latérale (5) est une vitre latérale avant d'un véhicule automobile.

8. Store de vitre latérale selon la revendication 1, **caractérisé en ce que** le cadre de fenêtre (3) comporte un dispositif d'ancrage en un point éloigné de l'arbre enrouleur (25).

9. Store de vitre latérale selon la revendication 8, **caractérisé en ce que** l'écran enroulable (21) est muni d'un dispositif d'ancrage (47).

10. Store due vitre latérale selon la revendication 1, **caractérisé en ce que** l'écran enroulable (21) est muni d'une poignée (22).

11. Store de vitre latérale selon la revendication 1, **caractérisé en ce que** le cadre de fenêtre (3) contient un rail de guidage dans la zone du bord supérieur de vitre (7).

12. Store de vitre latérale selon la revendication 11, **caractérisé en ce que** l'écran enroulable (21) est muni, à son extrémité éloignée de l'arbre enrouleur (25), d'un dispositif de guidage qui est conçu pour circuler dans le rail de guidage.

13. Store de vitre latérale selon la revendication 12, **caractérisé en ce qu'**un dispositif de freinage est associé au dispositif de guidage.

14. Store de vitre latérale selon la revendication 1, **caractérisé en ce que** la longueur du ressort hélicoïdal (39) est supérieure à la longueur de l'arbre enrouleur (25).

15. Store de vitre latérale selon la revendication 1, **caractérisé en ce qu'**un boîtier (35) est associé au ressort hélicoïdal (39).

16. Store de vitre latérale selon la revendication 15, **caractérisé en ce que** le boîtier (35) présente une forme au moins approximativement tubulaire.

17. Store de vitre latérale selon la revendication 15, **caractérisé en ce qu'**à l'extrémité située en bas dans la position d'utilisation le boîtier (35) est fermé de manière étanche aux liquides.

18. Store de vitre latérale selon la revendication 15, **caractérisé en ce que** le boîtier (35) est rempli au moins partiellement d'un liquide d'amortissement.

19. Store de vitre latérale selon la revendication 1, **caractérisé en ce que** l'extrémité de sortie (42) du ressort hélicoïdal (39) est munie d'une pièce de support (43) qui est montée tournante dans le boîtier.

20. Store de vitre latérale selon la revendication 1, **caractérisé en ce que** l'axe du ressort hélicoïdal (39) forme un angle compris entre 180° et environ 120° avec l'axe de l'arbre enrouleur (25).

21. Store de vitre latérale selon la revendication 1, **caractérisé en ce que** le dispositif d'accouplement (27) présente un dispositif d'entraînement (45) relié rigidement à l'arbre enrouleur (25) et un dispositif d'entraînement (46) relié rigidement à l'extrémité de sortie (42) du ressort hélicoïdal (39), lesquels dispositifs d'entraînement coopèrent l'un avec l'autre par complémentarité de formes.

22. Store de vitre latérale selon la revendication 21, **caractérisé en ce qu'**un des deux dispositifs d'entraînement (45, 46) est un crochet.

23. Store de vitre latérale selon la revendication 21, **caractérisé en ce qu'**un des deux dispositifs d'entraînement (45, 46) est un oeillet.

24. Store de vitre latérale selon la revendication 1, **caractérisé en ce que** le dispositif d'accouplement (27) comprend un arbre flexible ou un joint de cardan.
